# EUROPÄISCHE PATENTSCHRIFT

(11) **EP 2 381 535 B1**
(45) Veröffentlichungstag und Bekanntmachung des Hinweises auf die Patenterteilung: **04.03.2015**
(21) Anmeldenummer: 10305436.7
(22) Anmeldetag: 26.04.2010
(51) Int. Cl.: H01R 4/36, F16B 31/02

(54) **Anordnung zum Befestigen eines elektrischen Leiters in einer Klemme**
Assembly for fixing an electric conductor in a clamp
Dispositif de fixation d'un conducteur électrique dans une pince

(43) Veröffentlichungstag der Anmeldung: 26.10.2011
(73) Patentinhaber: Nexans, 75008 Paris (FR)
(72) Erfinder: Stauch, Gert, Dr., 95032 Hof (DE); Grötsch, Peter, 95111 Rehau (DE); Markgraf, Volker, 95195 Röslau (DE); Zapf, Martin, 95473 Creußen (DE)
(74) Vertreter: Döring, Roger

(56) Entgegenhaltungen:
- EP-A1- 0 688 960
- EP-A1- 1 626 187
- EP-B1- 0 750 723

## Beschreibung

Die Erfindung bezieht sich auf eine Anordnung zum Befestigen eines elektrischen Leiters in einer als Rohrstück ausgeführten metallischen Klemme, welche in ihrer Wandung mindestens ein mit einem Gewinde versehenes Durchgangsloch zur Aufnahme einer Klemmschraube hat, die in ihrem Aufbau mindestens eine Sollbruchstelle zur Begrenzung der Kraft aufweist, welche mittels eines an der Klemmschraube angreifenden, eine Drehung um ihre Achse bewirkenden Werkzeugs auf dieselbe ausgeübt wird (EP 0 750 723 B1).

Eine in dieser Anordnung eingesetzte, auch als "Abreißschraube" bzw. "Abscherschraube" bezeichnete Klemmschraube - im folgenden kurz "Schraube" genannt - wird beispielsweise in der Starkstromtechnik zum Verbinden der elektrischen Leiter zweier Starkstromkabel eingesetzt. Zur Erzielung und Aufrechterhaltung eines elektrisch gut leitenden Kontakts, ist eine feste Verbindung zwischen den Leitern zweier Kabel und einer rohrförmigen metallischen Klemme erforderlich, in welche die Leiter eingesteckt sind. Das könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, kann sie als Abscherschraube mit mindestens einer Sollbruchstelle ausgerüstet sein, die in ihrem axialen Verlauf als umlaufende Nut angeordnet ist. Der obere Teil der Schraube wird dann abgeschert, wenn die Festigkeit ihrer Sollbruchstelle erreicht ist bzw. überschritten wird. Der dann fehlende Schraubenkopf ist ein Indiz dafür, daß die Schraube ausreichend fest angezogen ist. Die Sollbruchstelle unterbricht das Gewinde der Schraube, so daß dessen Tragfähigkeit geschwächt wird. Das macht sich um so mehr ungünstig bemerkbar, je mehr derartige Sollbruchstellen bei einer Schraube vorhanden sind. Ein universeller Einsatz solcher Schrauben für Leiter unterschiedlichster Durchmesser ist daher oft nicht möglich.

Die Schraube nach der eingangs erwähnten EP 0 750 723 B1 weist in ihrem Verlauf mehrere, als umlaufende Nuten ausgebildete Sollbruchstellen auf, die parallel und mit axialem Abstand zueinander im Gewindeteil der Schraube angeordnet sind. Die Schraube ist außerdem mit einem zentralen Sackloch mit polygonalem Querschnitt ausgerüstet, das bis in die Nähe der am nächsten zur Schraubenspitze liegenden Sollbruchstelle ragt. Zur Betätigung der Schraube ist ein Drehkörper vorgesehen, der aus einem zur Einführung in das Sackloch bestimmten Stift mit polygonalem Querschnitt und einer denselben mit Abstand rundum umgebenden Haube besteht, an welcher der Stift befestigt ist und die außen eine Sechskantmutter zum Anlegen eines Werkzeugs aufweist. Für diese bekannte Schraube gilt wegen der größeren Anzahl von Sollbruchstellen der bereits beschriebene Mangel der verminderten Tragfähigkeit in erhöhtem Maße.

Die EP 1 626 187 A1 beschreibt eine Abreißschraube, die als zylindrischer Gewindestift mit einer kegelförmigen Bohrung ausgestaltet ist. In die Bohrung ist als Schubelement ein einfacher Zylinderstift eingesetzt, dessen axiale Länge so gewählt ist, dass er bei Anlage an einer Abstützung noch etwas über das erste Ende der Abreißschraube übersteht. Dadurch kann mittels einer Überwurfmutter, die beispielsweise als Hutmutter ausgebildet sein kann und auf das Außengewinde der Abreißschraube aufschraubbar ist, über das Schubelement eine Druckkraft auf die Abstützung und damit in die Abreißschraube in einen Bereich eingeleitet werden, der unterhalb des Eingriffs des Außengewindes mit der Gewindebohrung des Klemmenkörpers liegt. Bei einem weiteren Betätigen der Überwurfmutter leitet dieses über das Innengewinde eine Zugkraft in das Außengewinde und damit in die Abreißschraube ein. Beim weiteren Aufschrauben der Überwurfmutter auf die Abreißschraube reißt diese ab.

Die EP 0 688 960 A1 betrifft eine Abreißkopfschraube, mit einem Außengewindeabschnitt, einem Kopfabschnitt, einem eine Sollbruchstelle bildenden Verjüngungsabschnitt, der zwischen dem Außengewindeabschnitt und Kopfabschnitt vorgesehen ist, sowie einem einen Klemmkontakt ermöglichenden Endabschnitt, wobei die Abreißkopfschraube weiterhin eine Gewindehülse aufweist, die sich zumindest teilweise entlang des Außengewindeabschnitts erstreckt und die ein zum Außengewinde des Außengewindeabschnitts passendes Innengewinde aufweist, wobei die Gewindehülse ihrerseits ein Außengewinde aufweist.

Der Erfindung liegt die Aufgabe zugrunde, die eingangs geschilderte Schraube so zu gestalten, daß sie auf einfachere Art und Weise mit uneingeschränkter Tragfähigkeit zur festen Anlage an einem Leiter gebracht werden kann.

Diese Aufgabe wird gemäß der Erfindung dadurch gelöst,
- daß die Klemmschraube ein zylindrisches, als Hohlkörper ausgeführtes und mit einem Außengewinde versehenes, in das Durchgangsloch der Klemme einschraubbares Kontaktteil aufweist, das an seiner zur Anlage an dem Leiter bestimmten Spitze eine achsparallel verlaufende Gewindebohrung hat,
- daß die Klemmschraube außerdem ein hülsenförmiges, mit einem zum Außengewinde des Kontaktteils passenden Innengewinde ausgerüstetes Betätigungsteil aufweist, das in Montageposition auf das Kontaktteil aufgeschraubt ist und in seinem Innern eine polygonale Anlagefläche für einen in Montageposition der Klemmschraube mit dem Kontaktteil verbundenen, einen polygonalen Querschnitt aufweisenden Bolzen hat, der in Montageposition zum Anlegen des Werkzeugs mit einem Ende aus dem Betätigungsteil herausragt,
- daß der Bolzen als zur Klemmschraube gehörendes Bauteil an seinem anderen Ende ein zur Gewindebohrung des Kontaktteils passendes Außengewinde hat und in Montageposition der Klemmschraube in das Kontaktteil eingeschraubt ist,
- daß der Bolzen an seinem in das Kontaktteil eingeschraubten Ende, oberhalb des mit dem Außengewinde versehenen Bereichs eine Sollbruchstelle hat und
- daß das Kontaktteil eine definierte, in Abhängigkeit von der mittels des Werkzeugs aufzubringenden Kraft bemessene Wandstärke hat, die zur Erzeugung des Festsitzes der Schraube in der Klemme erforderlich ist und nach Erreichen des Festsitzes zum Abreißen des aus der Klemme herausragenden Bereichs des Kontaktteils durch das Betätigungsteil führt.

In dieser Anordnung ist eine aus den drei Teilen Kontaktteil, Betätigungsteil und Bolzen bestehende Schraube eingesetzt. Das zur Anlage an einem elektrischen Leiter bestimmte Kontaktteil hat ein Außengewinde, das auf seiner ganzen axialen Höhe ohne Unterbrechung vorhanden ist. Die Tragfähigkeit des Außengewindes bleibt daher ohne Einschränkung bzw. Schwächung während der gesamten Betätigung der Schraube bei dem vorgegebenen Wert erhalten. Das Kontaktteil und das auf dasselbe aufgeschraubte Betätigungsteil werden mittels des durch ein Werkzeug gedrehten Bolzens solange im Gewindeloch der Klemme gedreht, bis der Bolzen an seiner Sollbruchstelle abbricht. Dieser Zeitpunkt entspricht der Kraft bzw. dem Drehmoment, die bzw. das bis zum Festsitz der Schraube am Leiter auf dieselbe ausgeübt wird. Durch weiteres Drehen des Bolzens wird das Betätigungsteil danach weiter auf das Kontaktteil aufgeschraubt, bis es auf der Klemme aufliegt. Wenn der Bolzen dann mit entsprechender Kraft weitergedreht wird, wird der aus der Klemme herausragende Teil des Kontaktteils durch das Betätigungsteil abgetrennt bzw. abgerissen.

Ausführungsbeispiele des Erfindungsgegenstandes sind in den Zeichnungen dargestellt.

Es zeigen:
Fig. 1 schematisch eine Verbindungsstelle zwischen den Leitern zweier elektrischer Kabel im Schnitt.
Fig. 2 die drei Teile einer Klemmschraube nach der Erfindung voneinander getrennt.
Fig. 3 eine Draufsicht auf ein in Fig. 2 dargestelltes Bauteil.
Fig. 4 die Klemmschraube mit zusammengefügten Teilen.
Fig. 5 bis 9 unterschiedliche Positionen der Klemmschraube bei ihrer Betätigung.

Im folgenden wird weiter statt des Wortes "Klemmschraube" das kürzere Wort "Schraube" verwendet. Das Kontaktteil besteht mit Vorteil aus einem ausreichend festen, elektrisch gut leitenden Metall, vorzugsweise aus Messing oder einer Aluminiumlegierung. Das Betätigungsteil und der Bolzen können beispielsweise aus Stahl bestehen.

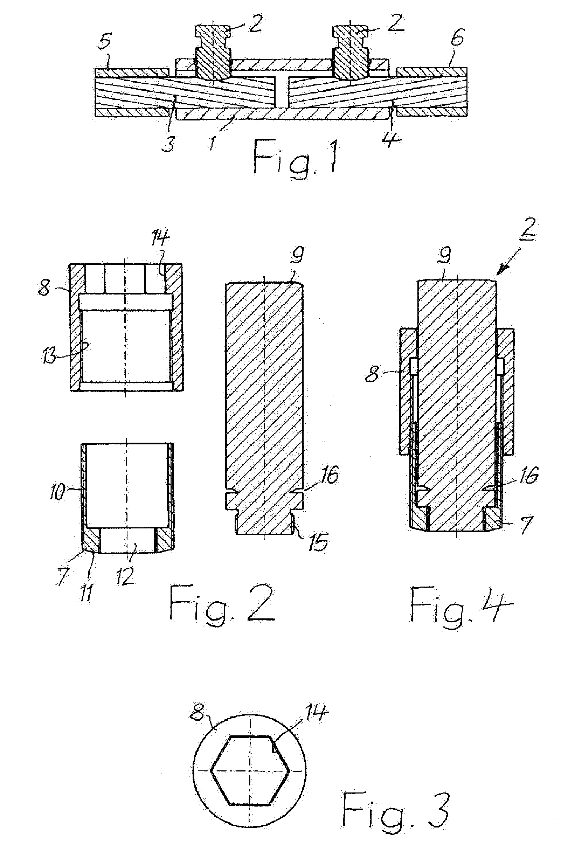

In Fig. 1 ist eine beispielsweise aus einer verzinnten Aluminiumlegierung bestehende, als Rohrstück ausgeführte Klemme 1 dargestellt. Die Klemme 1 hat zwei Gewindebohrungen, in denen jeweils eine mit einem Außengewinde versehene

Schraube 2 angeordnet ist. In die Klemme 1 ragen von zwei unterschiedlichen Seiten her die elektrischen Leiter 3 und 4 zweier elektrischer Kabel 5 und 6 hinein, bei denen es sich insbesondere um Energiekabel handelt. Sie sind in Montageposition durch die Schrauben 2 in der Klemme 1 festgelegt und dadurch elektrisch leitend miteinander verbunden. Die elektrischen Leiter 3 und 4 sind in bevorzugter Ausführungsform als mehrdrähtige Leiter ausgeführt. Sie bestehen vorzugsweise aus Aluminium oder Kupfer. Die Leiter 3 und 4 können auch aus Segmenten aufgebaut sein, in denen jeweils Einzeldrähte zusammengefaßt sind.

Die Schraube 2 besteht gemäß Fig. 2 - wie schon weiter oben erwähnt - aus drei miteinander zu verschraubenden Teilen, einem Kontaktteil 7, einem Betätigungsteil 8 und einem Bolzen 9, der in Arbeitsposition als fester Bestandteil der Schraube 2 in das Kontaktteil 7 eingeschraubt ist.

Das Kontaktteil 7 ist ein zylindrischer Hohlkörper mit einem auf seiner ganzen axialen Länge vorhandenen Außengewinde 10. Es hat eine zur Anlage an einem elektrischen Leiter 3 bzw. 4 bestimmte Stirnseite 11. Im Bereich dieser Stirnseite 11 ist im Kontaktteil 7 eine achsparallel verlaufende Gewindebohrung 12 angebracht, und zwar in einem vorzugsweise verengten Bereich des Kontaktteils 7. Die Gewindebohrung 12 ist mit Vorteil nach außen offen. Das dadurch in der Stirnseite 11 vorhandene Loch ist in Arbeitsposition der Schraube 2 durch den Bolzen 9 verschlossen (Fig. 4).

Das Betätigungsteil 8 ist ein hülsenartiger Hohlkörper, der innen an seiner Wandung ein Innengewinde 13 hat, das sich über einen wesentlichen Teil seiner axialen Höhe erstreckt. Das Außengewinde 9 des Kontaktteils 7 und das Innengewinde 13 des Betätigungsteils 8 sind so aufeinander abgestimmt, daß das Betätigungsteil 8 auf das Kontaktteil 7 aufgeschraubt werden kann. In seinem in Gebrauchslage oberen, vorzugsweise verdickten Bereich hat das Betätigungsteil 8 in seinem Hohlraum eine polygonale, vorzugsweise rechteckige, Anlagefläche 14 (Fig. 3) für den Bolzen 9, dessen Querschnitt dem lichten Querschnitt des Betätigungsteils 8 an der Anlagefläche 14 entspricht.

Der Bolzen 9 hat - wie bereits erwähnt - einen polygonalen Querschnitt. Er weist an seinem einen axialen Ende ein Außengewinde 15 auf, das zu der Gewindebohrung 12 des Kontaktteils 7 paßt, so daß der Bolzen 9 in dieselbe eingeschraubt werden kann. Dieses Ende des Bolzens 9 hat mit Vorteil geringere radiale Abmessungen als der Bolzen 9 insgesamt. Im Bereich seines mit dem Außengewinde 15 versehenen Endes hat der Bolzen 9 außerdem eine Sollbruchstelle 16, die in Gebrauchslage oberhalb des Teils mit dem Außengewinde 15 angebracht ist. Die Sollbruchstelle 16 ist mit Vorteil durch eine umlaufende, radiale Vertiefung im Bolzen 9 gebildet.

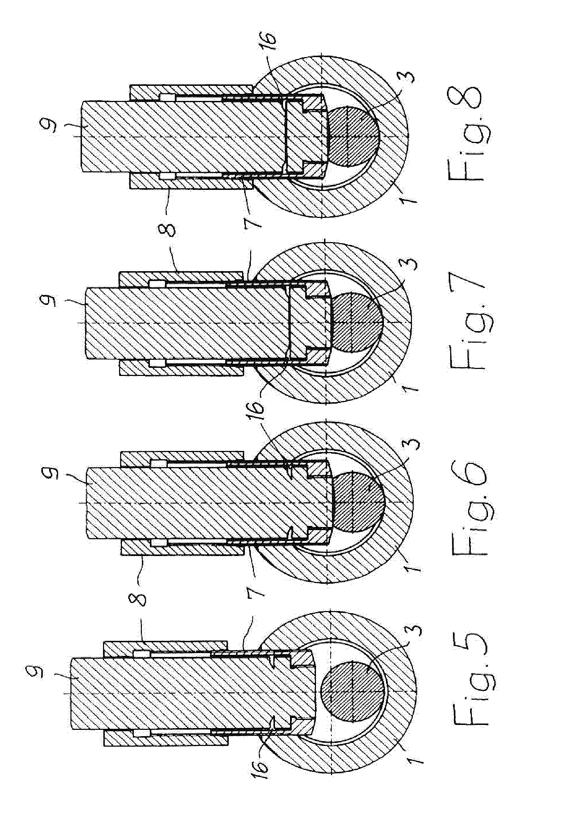

Die Schraube 2 geht im Montagezustand aus Fig. 4 hervor. Das Betätigungsteil 8 ist dabei mit einer axialen Länge auf das Kontaktteil 7 aufgeschraubt, welche der axialen Länge des Außengewindes 15 des Bolzens 9 entspricht, der in das Kontaktteil 7 eingeschraubt ist. Der Bolzen 9 ragt so weit aus dem Betätigungsteil 8 heraus, daß ein zum Drehen des Bolzens 9 geeignetes Werkzeug an denselben angelegt werden kann. Die so fertiggestellte Schraube 2 wird entsprechend den Fig. 5 bis 9 beispielsweise wie folgt zum Befestigen eines elektrischen Leiters 3 in einer Klemme 1 gehandhabt:
Zunächst wird die Schraube 2 in ein Gewindeloch der Klemme 1 eingeschraubt, bis sie beispielsweise die aus Fig. 5 ersichtliche Position hat. Beim weiteren Drehen und Anziehen der Schraube 2 mittels eines am Bolzen 9 angreifenden Werkzeugs trifft das Kontaktteil 7 auf den Leiter 3 auf, der dann zusammengedrückt wird (Fig. 6). Wenn die für den Festsitz der Schraube 2 in der Klemme 1 erforderliche Anpreßkraft erreicht ist oder überschritten wird, bricht der Bolzen 9 an seiner Sollbruchstelle 16 ab (Fig. 7). Beim Weiterdrehen des Bolzens 9 wird das Befestigungsteil 8 in Richtung der Klemme 1 auf dem nicht mehr mitgedrehten Kontaktteil 7 weitergedreht, bis es gemäß Fig. 8 auf der Klemme 1 aufliegt.

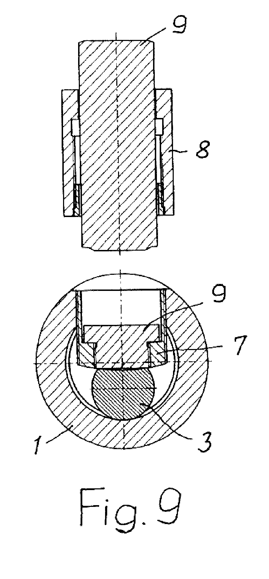

Wenn der Bolzen 9 dann mit ausreichender Kraft weitergedreht wird, wird der aus der Klemme 1 herausragende Teil des Kontaktteils 7 abgetrennt bzw. abgerissen (Fig. 9). Er kann zusammen mit Betätigungsteil 8 und Bolzen 9 von der Klemme 1 abgehoben werden. Damit der aus der Klemme 1 herausragende Teil des Kontaktteils 7 im geschilderten Sinne abgetrennt werden kann, muß seine Wandstärke entsprechend bemessen sein. Die Wandstärke muß nur groß genug sein, damit das Kontaktteil 7 die für den Festsitz der Schraube 2 erforderliche Kraft übertragen kann. Eine größere Wandstärke ist jedoch nicht erforderlich. In diesem Sinne ist die Wandstärke des Kontaktteils 7 in Abhängigkeit von der Größe der erwähnten Kraft zu bemessen.

Die Schraube 2 ist ohne Änderungen für elektrische Leiter unterschiedlicher Durchmesser einsetzbar, weil sie ohne vorgegebene Sollbruchstellen in der Wandung des Kontaktteils 7 in jeder geeigneten Höhe abgetrennt werden kann. Sie kann durch unterschiedliche Ausführungen der Sollbruchstelle 16 im Bolzen 9 auch einfach für unterschiedliche Anpreßkräfte ausgelegt werden.

## Patentansprüche

1. Anordnung zum Befestigen eines elektrischen Leiters in einer als Rohrstück ausgeführten metallischen Klemme, welche in ihrer Wandung mindestens ein mit einem Gewinde versehenes Durchgangsloch zur Aufnahme einer Klemmschraube hat, die in ihrem Aufbau mindestens eine Sollbruchstelle zur Begrenzung der Kraft aufweist, welche mittels eines an der Klemmschraube angreifenden, eine Drehung um ihre Achse bewirkenden Werkzeugs auf dieselbe ausgeübt wird, wobei:
- die Klemmschraube (2) ein zylindrisches, als Hohlkörper ausgeführtes und mit einem Außengewinde (10) versehenes, in das Durchgangsloch der Klemme einschraubbares Kontaktteil (7) aufweist, das an seiner zur Anlage an dem Leiter bestimmten Spitze eine achsparallel verlaufende Gewindebohrung (12) hat,
- die Klemmschraube (2) außerdem ein hülsenförmiges, mit einem zum Außengewinde des Kontaktteils (7) passenden Innengewinde (13) ausgerüstetes Betätigungsteil (8) aufweist, das in Montageposition auf das Kontaktteil (7) aufgeschraubt ist und in seinem Innern eine polygonale Anlagefläche (14) für einen in Montageposition der Klemmschraube (2) mit dem Kontaktteil (7) verbundenen, einen polygonalen Querschnitt aufweisenden Bolzen (9) hat, der in Montageposition zum Anlegen des Werkzeugs mit einem Ende aus dem Betätigungsteil (8) herausragt,
- der Bolzen (9) als zur Klemmschraube (2) gehörendes Bauteil an seinem anderen Ende ein zur Gewindebohrung (12) des Kontaktteils (7) passendes Außengewinde (15) hat und in Montageposition der Klemmschraube (2) in das Kontaktteil (7) eingeschraubt ist,
- der Bolzen (9) an seinem in das Kontaktteil (7) eingeschraubten Ende, oberhalb des mit dem Außengewinde (15) versehenen Bereichs eine Sollbruchstelle (16) hat und
- das Kontaktteil (7) eine definierte, in Abhängigkeit von der mittels des Werkzeugs aufzubringenden Kraft bemessene Wandstärke hat, die zur Erzeugung des Festsitzes der Schraube (2) in der Klemme erforderlich ist und nach Erreichen des Festsitzes zum Abreißen des aus der Klemme herausragenden Bereichs des Kontaktteils (7) durch das Betätigungsteil (8) führt.

2. Anordnung nach Anspruch 1, **dadurch gekennzeichnet, daß** die Gewindebohrung (12) in einem verengten Bereich des Kontaktteils (7) angebracht ist.

3. Anordnung nach Anspruch 2, **dadurch gekennzeichnet, daß** das Außengewinde (15) des Bolzens (9) in einem Bereich mit verminderten radialen Abmessungen desselben angebracht ist.

4. Anordnung nach einem der Ansprüche 1 bis 3, **dadurch gekennzeichnet, daß** die Sollbruchstelle (16) des Bolzens (9) eine umlaufende, radiale Vertiefung ist.

## Claims

1. Device for the fastening of an electrical conductor within a tube like metallic clamp, which has in its wall at least one threaded hole for the receiption of a clamping screw, which has at least one breaking area for limiting the force which is applied to the screw by a tool that rotates the same, wherein:
- the clamping screw (2) has a contact part (7) which can be screwed into the threaded hole of the clamp and is designed as a cylindrical hollow body having an outside screw thread (10) and at its one end face which is provided for the contact to the conductor, a taphole (12) which runs in parallel to the axis of the contact part (7),
- the clamping screw (2) in addition has a tube like operation part (8) which has an internal thread corresponding to the outside thread of the contact part (7), which is screwed in mounting position onto the contact part (7) and which has an inner contact surface with a polygonal cross-section for the insertion of a third part (9) of the screw with a corresponding polygonal cross-section which in mounting position is screwed onto the contact part (7) and which protrudes with its one end from the operation part (8) as a contact surface for the tool,
- that the third part (9) has an outer thread (15) at its other end which corresponds to the taphole (12) of the contact part (7) and being screwed in mounting position of the clamping screw into the contact part (7),
- the third part (9) has a breaking area (16) at its end which is screwed into the contact part (7) short above the thread at its end and
- the contact part (7) has a defined wall thickness depending on the maximum force of the tool for a tight fit of the same on the one hand and on the shearing off of the contact part (7) by the operation part (8) on the other hand when the tight fit is achieved.

2. Device according to claim 1, **characterized in that** the taphole (12) is positioned within a narrowed area of the contact part (7).

3. Device according to claim 2, **characterized in that** the outer thread (15) of the third part (9) is positioned in an area with reduced radial dimensions.

4. Device according to one of the claims 1 to 3, **characterized in that** the breaking area (16) of the third part (9) is formed as a circular, radially extending recess.

## Revendications

1. Agencement pour la fixation d'un conducteur électrique dans une borne métallique réalisée sous forme de pièce tubulaire qui présente dans sa paroi au moins un trou traversant pourvu d'un filetage pour recevoir une vis de serrage qui présente dans sa structure au moins un point destiné à la rupture pour limiter la force qui est exercée sur celle-ci au moyen d'un outil venant en prise avec la vis de serrage et provoquant une rotation autour de son axe, dans lequel :
- la vis de serrage (2) présente une partie de contact (7) cylindrique, réalisée sous forme de corps creux et pourvue d'un filetage extérieur (10) pouvant être vissée dans le trou traversant de la borne, qui présente au niveau de sa pointe prévue pour s'appliquer contre le conducteur un alésage fileté s'étendant avec son axe parallèle (12),
- la vis de serrage (2) présente en outre une partie d'actionnement (8) en forme de douille, munie d'un filetage intérieur (13) adapté au filetage extérieur de la partie de contact (7), qui est vissée dans la position de montage sur la partie de contact (7) et qui présente en son intérieur une surface d'appui polygonale (14) pour un boulon (9) connecté dans la position de montage de la vis de serrage (2) à la partie de contact (7), présentant une section transversale polygonale, qui, dans la position de montage, fait saillie par une extrémité hors de la partie d'actionnement (8) pour s'appliquer contre l'outil,
- le boulon (9) en tant que composant appartenant à la vis de serrage (2) présente, au niveau de son autre extrémité, un filetage extérieur (15) adapté à l'alésage fileté (12) de la partie de contact (7) et est vissé dans la position de montage de la vis de serrage (2) dans la partie de contact (7),
- le boulon (9) présente, au niveau de son extrémité vissée dans la partie de contact (7), au-dessus de la région munie du filetage extérieur (15), un point destiné à la rupture (16) et
- la partie de contact (7) présente une épaisseur de paroi définie, dimensionnée en fonction de la force devant être appliquée au moyen de l'outil, laquelle est requise pour générer l'ajustement serré de la vis (2) dans la borne et, une fois l'ajustement serré obtenu, conduit à l'arrachement de la région de la partie de contact (7) faisant saillie hors de la borne par la partie d'actionnement (8).

2. Agencement selon la revendication 1, **caractérisé en ce que** l'alésage fileté (12) est réalisé dans une région rétrécie de la partie de contact (7).

3. Agencement selon la revendication 2, **caractérisé en ce que** le filetage extérieur (15) du boulon (9) est réalisé dans une région de celui-ci ayant des dimensions radiales réduites.

4. Agencement selon l'une quelconque des revendications 1 à 3, **caractérisé en ce que** le point destiné à la rupture (16) du boulon (9) est un renfoncement radial périphérique.
